# EUROPÄISCHE PATENTANMELDUNG

(11) **EP 1 577 588 A2**
(43) Veröffentlichungstag der Anmeldung: **21.09.2005**
(21) Anmeldenummer: 05002389.4
(22) Anmeldetag: 04.02.2005
(51) Int. Cl.: F16H 57/02

(54) **Gehäuse, insbesondere Getriebegehäuse**

(30) Priorität: 19.03.2004 DE 102004013556
(71) Anmelder: AUDI AG, 85045 Ingolstadt (DE)
(72) Erfinder: Märkl, Johann, 85128 Nassenfels (DE)
(74) Vertreter: Asch, Konrad

(57) **Zusammenfassung**

Die Erfindung betrifft ein Gehäuse 10, mit einer einen Hohlraum 16 begrenzenden Gehäusewand 18, die im Bereich wenigstens eines verstärkten Wandabschnitts aus einem Wandteil 20 und einer sich neben dem Wandteil 20 erstreckenden Wandverstärkung 22 besteht, wobei das Wandteil 20 und die Wandverstärkung 22 aneinander positioniert sind. Um eine einfache und mit geringem Aufwand herstellbare Konstruktion zu erreichen, besteht die Wandverstärkung 22 aus einem längs einer Tiefziehrichtung T tiefgezogenen Blech.

## Beschreibung

Die Erfindung betrifft ein Gehäuse gemäß der im Oberbegriff des Anspruchs 1 angegebenen Art.

Ein Gehäuse dieser Art ist in der DE 198 00 571 A1 beschrieben. Dieses vorbekannte Gehäuse besteht aus einem inneren Tragrahmen aus Stahl oder Gusseisen, der Lagerungen des Gehäuses abstützt, und einer mit dem Tragrahmen verbundenen öldichten Hülle, die z. B. aus Kunststoff bestehen kann. Es ist Zweck dieser bekannten Ausgestaltung, ein Gehäuse zu schaffen, das eine große mechanische Festigkeit und ein geringes Gewicht aufweist.

Der DE 82 36 523 U1 ist ein Getriebegehäuse zu entnehmen, das aus zwei Gehäuseteilen besteht, deren Wände als gepresste und gestanzte Blechteile ausgebildet sind.

Der Erfindung liegt die Aufgabe zugrunde, ein Gehäuse gemäß der im Oberbegriff des Anspruchs 1 angegebenen Art so auszugestalten, dass eine einfache und mit geringem Aufwand herstellbare Konstruktion erreicht wird. Im Weiteren soll das Gehäuse auch ein geringes Gewicht haben. Ferner soll das Gehäuse kostengünstig herstellbar sein.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass der Formvorgang Tiefziehen sich dazu eignet, wenigstens ein Wandteil eines Gehäuses zu formen, dessen Gehäusewand aus zwei Wandteilen besteht, die in zwei Lagen zusammengesetzt sind.

Das erfindungsgemäße Gehäuse weist eine zweilagige oder zweischalige Gehäusewand auf, die aus einem schalenförmigen Wandteil und einer Wandverstärkung zusammengesetzt ist, wobei die Wandverstärkung aus einem längs einer Tiefziehrichtung tiefgezogenen Blech besteht. Hierdurch ist ein Gehäuse geschaffen, das aus mehreren Gründen vorteilhaft ist. Es weist eine einfache Konstruktion auf, die durch ein Tiefziehen der Wandverstärkung aus einer Platine oder einem Rohteil erreicht wird. Dabei ist eine einstückige Ausgestaltung der Wandverstärkung gewährleistet, die auch stabil ist. Da sich ein Tiefziehvorgang verhältnismäßig schnell durchführen lässt, ermöglicht die erfindungsgemäße Ausgestaltung auch eine kostengünstige Herstellung.

Die vorgenannten Vorteile lassen sich vermehren, wenn auch das Wandteil aus einem längs der Tiefziehrichtung tiefgezogenen Blech besteht. Dabei kann die Wandverstärkung eine größere Wanddicke aufweisen als das Wandteil.

Im Rahmen der Erfindung kann die tiefgezogene Wandverstärkung im Bereich eines wahlweisen Abschnitts der Gehäusewand angeordnet sein. Aus Stabilitätsgründen ist es besonders vorteilhaft, die Wandverstärkung an einer den Hohlraum umgebenden gemeinsamen Umfangswand auszubilden, deren sich quer zu der Tiefziehrichtung erstreckende Querschnittsgröße in der Tiefziehrichtung abnimmt .

Durch eine oder mehrere stufenförmige Verjüngungen der die Wandverstärkung aufweisenden gemeinsamen Umfangswand, vorzugsweise im Bereich ihrer Enden, lässt sich die Stabilität weiter vergrößern.

Ein hohlzylindrischer tiefgezogener Umfangswandabschnitt eignet sich mit seiner Innenmantelfläche dazu, eine Lagerfläche für z. B. eine Schaltstange, eine Welle oder einen Lagerträger zu bilden.

Die Stabilität wird auch dann weiter vergrößert, wenn die Umfangswand an ihrem ersten Ende einen Flansch aufweist, dessen äußerer Rand vorzugsweise in die Tiefziehrichtung umgeformt ist.

Eine formschlüssige Fixierung des Wandteils und der Wandverstärkung aneinander lässt sich in wenigstens einer Richtung der Mittelachse durch die gegenseitige Anlage an Schulterflächen und in der Querrichtung durch das Ineinanderstecken des Wandteils und der Wandverstärkung erreichen. Eine kraftschlüssige Fixierung des Wandteils und der Wandverstärkung aneinander lässt sich z. B. dann erreichen, wenn wenigstens zwei Umfangswandabschnitte der Wandverstärkung und des Wandteils mit Presspassung aufeinandersitzen. Im Übrigen können das Wandteil und die Wandverstärkung gegebenenfalls zusätzlich wenigstens stellenweise durch Kleben oder Schweißen, vorzugsweise Punktschweißen, aneinander befestigt sein.

Die erfindungsgemäße Ausgestaltung ermöglicht auch eine gerippeförmige und leichte Konstruktion durch die Anordnung von Ausnehmungen in der Wandverstärkung. Dabei können z. B. mehrere Ausnehmungen im Wandteil auf dem Umfang verteilt angeordnet sein. Von den zwischen den Ausnehmungen vorhandenen Streifen der Wandverstärkung können in vorbeschriebener Weise mit der Umfangswand des Wandteils verbunden sein.

Eine weitere Stabilisierung lässt sich erreichen, wenn im Wandteil und/oder in der Wandverstärkung eine oder mehrere längs der Tiefziehrichtung und/oder quer dazu verlaufende Sicken angeordnet sind.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand von in der Zeichnung dargestellten Ausführungsbeispielen näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: die untere Hälfte eines Halbschnitts eines erfindungsgemäßen Gehäuses, insbesondere Getriebegehäuses, für ein Kraftfahrzeug, vorzugsweise für einen Personenkraftwagen;
- Fig. 2: den Teilschnitt II-II in Fig. 1; und
- Fig. 3: den Teilschnitt II-II in abgewandelter Ausgestaltung.

Das Gehäuse 10 ist Teil eines in seiner Gesamtheit mit 12 bezeichneten Gesamtgehäuses, bei dem es sich z. B. um ein Getriebegehäuse oder um eine Motor/Getriebegehäuse-Kombination handeln kann, bei der z. B. das Gehäuse 10 das Getriebegehäuse bildet. Das Gehäuse 10 kann aber auch ein anderes Gehäuse bilden. Wegen seiner leichten, trotzdem stabilen und deshalb mit geringer Baugröße herstellbaren Konstruktion eignet sich das Gehäuse 10 besonders gut für ein Kraftfahrzeug, vorzugsweise für einen Personenkraftwagen.

Das andere Gehäuseteil 14, an dem das Gehäuse 10 mit einer ebenen Teilungsfuge F anliegt, ist ein z. B. aus Grauguss bestehendes Gussteil.

Das Gehäuse 10 weist eine einen Gehäuse-Hohlraum 16 begrenzende Gehäusewand 18 auf, die wenigstens auf einem Teilbereich des Gehäuses 10 aus zwei Blechen besteht, die zweilagig die Gehäusewand 18 bilden. Die Gehäusewand 18 ist eine den Hohlraum 16 umgebende Umfangswand 18a, deren zwei Lagen 18b, 18c durch ein Wandteil 20 und eine Wandverstärkung 22 gebildet sind, die - im Querschnitt gesehen - nebeneinander angeordnet sind. Das eine dichte Hülle bildende Wandteil 20 ist bezüglich des Hohlraums 16 außen angeordnet, und die Wandverstärkung 22 ist innen angeordnet. Eine umgekehrte Anordnung, nämlich die Wandverstärkung 22 außen und das Wandteil 20 innen, ist ebenfalls möglich.

Das Gehäuse 10 kann eine Form aufweisen, die bezüglich der sich quer, insbesondere rechtwinklig, zur Teilungsfuge F erstreckenden Mittelachse A rotationssymmetrisch ist. Die Form kann aber auch rotationsunsymmetrisch sein.

Sowohl das Wandteil 20 als auch die Wandverstärkung 22 sind jeweils ein tiefgezogenes Blechteil. Die Blechteile sind aneinander fixiert, z. B. klemmend ineinander gesteckt. Anstelle oder zusätzlich zu dieser Klemmverbindung können die Wände des Wandteils 20 und der Wandverstärkung 22 durch Kleben oder Schweißen miteinander verbunden sein, z. B. durch Punktschweißen.

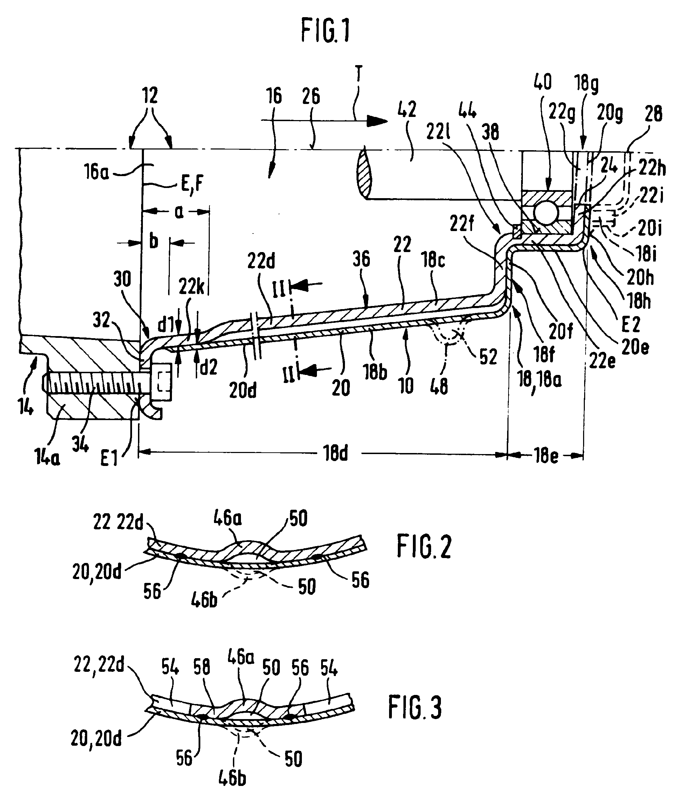

Die Tiefziehrichtung T erstreckt sich in Fig. 1 von links nach rechts. Die Querschnittsgröße des Gehäuses 10 bzw. des Wandteils 20 und der Wandverstärkung 22 verjüngt sich in die Tiefziehrichtung T kontinuierlich und/oder stufenförmig, wobei wenigstens ein erster Umfangswandabschnitt 18d in der Tiefziehrichtung T konvergent und ein zweiter Umfangswandabschnitt 18e prismatisch sein kann. Das im Querschnitt größere Ende des Gehäuses ist mit E1 und das im Querschnitt kleinere Ende mit E2 bezeichnet. Zwischen den Umfangswandabschnitten 18d, 18e erstreckt sich ein Schulterwandabschnitt 18f, der die Querschnittsgröße des Umfangswandabschnitts 18d verjüngt.

Das Gehäuse 10 kann mit einer strichpunktiert angedeuteten Bodenwand 18g topfförmig ausgebildet sein. Es kann aber auch anstelle der Bodenwand 18g oder in der Bodenwand 18g ein Loch 24 angeordnet sein. Hierdurch ist ein sich vom äußeren Rand des Umfangswandabschnitts 18e nach innen erstreckender Schulterwandabschnitt 18h gebildet. Von dessen innerem Rand kann ein weiterer Umfangswandabschnitt 18i abstehen, was angedeutet dargestellt ist. Der Umfangswandabschnitt 18h begrenzt das Loch 24, das durch ein Verschlussteil 28 dicht verschlossen sein kann, z. B. durch einen Einschlagdeckel.

Das in Fig. 1 linke Ende E1 des Gehäuses 10 weist einen die Hohlraumöffnung 16a umgebenden Basisrand 30 mit einem eine äußere Schulterwand 32 bildenden Außenflansch auf, der sich in einer Anbauebene E der Fuge F erstreckt und durch mehrere auf dem Umfang verteilt angeordnete, den Außenflansch in Löchern durchfassende Schrauben 34 mit einem verdickten Rand 14a des Gehäuseteils 14 verschraubt ist. Die Fuge F ist abgedichtet.

Bei diesem Ausführungsbeispiel weist die Wandverstärkung 22 eine größere Dicke d1 auf als die Dicke d2 des Wandteils 20. Die Wandverstärkung 22 ist vorzugsweise auf dem gesamten Bereich der Gehäusewand 18 des Gehäuses 10 bzw. der Umfangswand 18a angeordnet, und sie bildet eine in ihrer Gesamtheit mit 36 bezeichnete tragende Struktur. Das Wandteil 20 kann ebenfalls im gesamten Bereich oder nur auf einem Abschnitt der Gehäusewand 18 bzw. der Umfangswand 18a angeordnet sein.

Die den vorbeschriebenen Abschnitten der gemeinsamen Umfangswand 18 benachbarten Umfangswandabschnitte des Wandteils 20 und der Wandverstärkung 22 sind mit entsprechenden Buchstaben bezeichnet und werden wie folgt aufgezählt: Wandteil-Umfangswandabschnitte 20d, 20e, Verstärkungs-Umfangswandabschnitte 22d, 22e, Wandteil-Schulterwand 20f, Verstärkungs-Schulterwand 22f, Wandteil-Bodenwand 20g, Verstärkungs-Bodenwand 22g, Wandteil-Schulterwand 20h, Verstärkungs-Schulterwand 22h, Wandteil-Umfangswandabschnitt 20i, Verstärkungs-Umfangswandabschnitt 22i.

Die Umfangswandabschnitte 20d, 22d und/oder die Umfangswandabschnitte 20e, 22e können jeweils mit einem geringen Passungsspiel oder mit einer Presspassung aufeinandersitzen und z. B. durch die Presspassung längs der Mittelachse 26 kraftschlüssig aneinander befestigt sein, gegebenenfalls zusätzlich zum erwähnten Kleben oder Schweißen.

Der hohlzylindrische Umfangswandabschnitt 18e kann mit seiner Innenwandung in einfacher und vorteilhafter Weise eine Lagerfläche 38 für ein Drehlager 40, z. B. für den Außenring eines Wälzlagers, bilden, in dem eine Welle 42 drehbar gelagert ist. Das Drehlager 40 ist durch einen in eine Innennut im Umfangswandabschnitt 22e eingesetzten Sicherungsring 44 und der Schulterwand 18h axial arretiert.

Die Wandverstärkung 22 und/oder das Wandteil 20 kann bzw. können jeweils eine oder mehrere Sicken 46a, 46b, 48 aufweisen, die sich etwa längs der Tiefziehrichtung T oder quer dazu bzw. in die Umfangsrichtung erstrecken können. Die Sicken 46a, 46b, 48 führen aufgrund einer Profilierung der zugehörigen Wand zu einer Versteifung und Stabilisierung, und insbesondere dann, wenn sie der Fuge zwischen dem Wandteil 20 und der Wandverstärkung 22 abgewandt sind. Außerdem bilden die Sicken 46a, 46b, 48 Kanäle 50, 52, die z. B. als Schmiermittel- bzw. Ölkanäle benutzt werden können. Es lässt sich die Querschnittsgröße des oder der Kanäle 50 vergrößern, wenn die Sicken 46a, 46b einander gegenüberliegend angeordnet sind, wodurch ein gemeinsamer Kanal gebildet wird, wie es Fig. 2 und 3 zeigen.

Die wenigstens eine sich in die Umfangsrichtung erstreckende und andeutungsweise dargestellte Sicke 48 ist vorzugsweise an der dünneren Lage 18b, hier am Umfangswandabschnitt 20d, ausgebildet. Eine solche Sicke 48 ermöglicht einen weiteren Vorteil, nämlich einen Längenausgleich zwischen den Lagen 18b, 18c bzw. dem Wandteil 20 und der Wandverstärkung 22 bei Temperaturschwankungen. Es können deshalb für den Wandteil 20 und die Wandverstärkung 22 unterschiedliche Materialien mit unterschiedlichen Wärmeausdehnungskoeffizienten benutzt werden.

Die Querschnittsform der Sicken 46, 48 ist vorzugsweise kreisbogenförmig gerundet.

Wenn die Sicken 46a, 46b und die sie enthaltende Wand sich etwa längs der Tiefziehrichtung T erstrecken, dann können sie beim Tiefziehen mitgeformt werden. Bei den Ausführungsbeispielen ist diese Bedingung für die wenigstens eine, sich im Umfangswandabschnitt 18d angeordnete Sicke 48 nicht erfüllt. Diese sich in die Umfangsrichtung vorzugsweise umlaufend erstreckende Sicke 48 wird nach dem Tiefziehen des Wandteils 20 nach außen geformt oder wird als Absatz ausgebildet und ist damit etwas tiefziehtechnisch herstellbar.

Es ist zur Verringerung des Gewichts und gegebenenfalls auch des Materials vorteilhaft, insbesondere in der dickeren Wandung, hier in der Wandverstärkung 22, eine oder mehrere, auf dem Umfang verteilt angeordnete Ausnehmungen 54 vorzusehen. Bei dem Ausführungsbeispiel nach Fig. 3 befinden sich die Ausnehmungen 54 im Bereich des Umfangswandabschnitts 22d. Sie können eine längliche Form aufweisen, die sich in die Tiefziehrichtung T erstreckt. Die nicht sichtbare Länge der Ausnehmungen 54 kann z. B. der Länge der Sicken 46a, 46b entsprechen. Mehrere Ausnehmungen 54 sind vorzugsweise auf dem Umfang gleichmäßig verteilt angeordnet.

Beim Ausführungsbeispiel nach Fig. 1 beginnen die Sicken 46a, 46b und gegebenenfalls auch die Ausnehmung 54 in einem Abstand a vom Ende E1. Im Bereich der Schulterwand 22f erstrecken sich die Sicken 46a, 46b in der Tiefziehrichtung T vorzugsweise bis zur inneren Schulterfläche, die durchgehend ausgebildet sein und deshalb beim Tiefziehen mitgeformt werden kann.

Der dem Ende E1 zugewandte Rand des Wandteils 20 weist einen Abstand b vom Ende E1 auf. Dabei kann der Rand auch einen Abstand von der Schulterwand 32 bzw. vom Flansch aufweisen.

Die vorbeschriebenen und z. B. durch Schweißen, Löten oder Kleben gebildeten Verbindungsstellen 56 zwischen dem Wandteil 20 und der Wandverstärkung 22 können zwischen den Umfangswandabschnitten 20d und 22d bzw. zwischen dem Umfangswandabschnitt 20d und den Wandverstärkungsstreifen 58 zwischen den Ausnehmungen 54 angeordnet sein, wie es die Fig. 2 und 3 zeigen.

Das Wandteil 20 und die Wandverstärkung 22 bestehen aus Metallblech, insbesondere Stahlblech.

Das Wandteil 20 bildet eine dichte Hülle für wenigstens den gerippeförmigen Abschnitt 18d der Wandverstärkung 22. An beiden in der Tiefziehrichtung T voneinander beabstandeten Enden der Ausnehmungen 54 weist die Wandverstärkung 22 sich in die Umfangsrichtung ununterbrochene erstreckende und somit ringförmige Umfangswandabschnitte 22k, 221 auf, die auf ihrem gesamten Umfang durch ein Dichtmittel dicht mit dem ring- bzw. hülsenförmigen Wandteil 20 verbunden sind, z. B. durch Schweißen, Löten oder Kleben.

### BEZUGSZEICHENLISTE

- 10: Gehäuse
- 12: Gesamtgehäuse
- 14: Gehäuseteil
- 14a: verstärkter Rand
- 16: Hohlraum
- 16a: Hohlraumöffnung
- 18: Gehäusewand
- 18a: Umfangswand
- 18b: innere Lage
- 18c: äußere Lage
- 18d: Umfangswandabschnitt
- 18e: Umfangswandabschnitt
- 18f: Schulterwand
- 18g: Bodenwand
- 18h: Schulterwand
- 18i 18j: Umfangswandabschnitt
- 20: Wandteil
- 20d: Umfangswandabschnitt
- 20e: Umfangswandabschnitt
- 20g: Bodenwand
- 20h: Schulterwand
- 22: Wandverstärkung
- 22d: Umfangswandabschnitt
- 22e: Umfangswandabschnitt
- 22f: Schulterwand
- 22i: Umfangswandabschnitt
- 22k: Umfangswandabschnitt
- 221: Umfangswandabschnitt
- 24: Loch
- 26: Mittelachse
- 28: Verschlussteil
- 30: Basisrand
- 32: äußere Schulterwand
- 34: Schraube
- 36: tragende Struktur
- 38: Lagerfläche
- 40: Drehlager
- 42: Welle
- 44: Sicherungsring
- 46: Sicke
- 48: Sicke
- 50: Kanal
- 52: Kanal
- 54: Ausnehmung
- 56: Verbindugsstellen
- 58: Wandverstärkungsstreifen

- a: Abstand
- b: Abstand
- d1: Dicke
- d2: Dicke
- E: Anbauebene
- E1: Ende
- E2: Ende
- F: Fuge

## Patentansprüche

1. Gehäuse (10), insbesondere Getriebegehäuse, mit einer einen Hohlraum (16) begrenzenden Gehäusewand (18), die im Bereich wenigstens eines verstärkten Wandabschnitts aus einem Wandteil (20) und einer sich neben dem Wandteil (20) erstreckenden Wandverstärkung (22) besteht, wobei das Wandteil (20) und die Wandverstärkung (22) aneinander positioniert sind, **dadurch gekennzeichnet, dass** die Wandverstärkung (22) aus einem längs einer Tiefziehrichtung (T) tiefgezogenen Blech besteht.

2. Gehäuse nach Anspruch 1, **dadurch gekennzeichnet, dass** das Wandteil (20) ebenfalls aus einem längs der Tiefziehrichtung (T) tiefgezogenem Blech besteht.

3. Gehäuse nach Anspruch 1 oder 2, **dadurch gekennzeichnet, dass** die Wandverstärkung (22) eine größere Wanddicke (d1) aufweist als das Wandteil (20).

4. Gehäuse nach einem der vorhergehenden Ansprüche, **dadurch gekennzeichnet, dass** das Wandteil (20) und die Wandverstärkung (22) jeweils Umfangswandabschnitte (20d, 22d) sind, die eine den Hohlraum (16) umgebende gemeinsame Umfangswand (18a) bilden, deren sich quer zu der Tiefziehrichtung (T) erstreckende Querschnittsgröße von ihrem ersten Ende (E1) zu ihrem gegenüberliegenden zweiten Ende (E) kontinuierlich und/oder stufenförmig abnimmt.

5. Gehäuse nach Anspruch 4, **dadurch gekennzeichnet, dass** eine stufenförmige Verjüngung der gemeinsamen Umfangswand (18a) im Bereich ihres zweiten Endes (E2) angeordnet ist.

6. Gehäuse nach Anspruch 4 oder 5, **dadurch gekennzeichnet, dass** die gemeinsame Umfangswand (18a) wenigstens einen sich kontinuierlich verjüngenden, insbesondere hohlkegelförmigen, gemeinsamen Umfangswandabschnitt (18d) und/oder einen hohlzylindrischen gemeinsamen Umfangswandabschnitt (18e) aufweist.

7. Gehäuse nach Anspruch 6, **dadurch gekennzeichnet, dass** in der Tiefziehrichtung (T) der hohlzylindrische gemeinsame Umfangswandabschnitt (18e) dem sich kontinuierlich verjüngenden gemeinsamen Umfangswandabschnitt (18d) nachgeordnet ist.

8. Gehäuse nach Anspruch 6 oder 7, **dadurch gekennzeichnet, dass** zwischen dem sich kontinuierlich verjüngenden gemeinsamen Umfangswandabschnitt (18d) und dem hohlzylindrischen gemeinsamen Umfangswandabschnitt (18e) eine stufenförmige Verjüngung der gemeinsamen Umfangswand (18a) angeordnet ist, insbesondere in Form einer im Wesentlichen radialen Schulterwand (18f).

9. Gehäuse nach einem der vorhergehenden Ansprüche 4 bis 8, **dadurch gekennzeichnet, dass** die gemeinsame Umfangswand (18a) an ihrem zweiten Ende (E2) eine nach innen gerichtete Schulterwand (18h) aufweist.

10. Gehäuse nach einem der vorhergehenden Ansprüche 4 bis 9, **dadurch gekennzeichnet, dass** die Umfangswand (18a) an ihrem ersten Ende (E1)einen Flansch (32) aufweist, dessen äußerer Rand vorzugsweise in die Tiefziehrichtung (T) umgeformt ist.

11. Gehäuse nach einem der vorhergehenden Ansprüche 4 bis 10, **dadurch gekennzeichnet, dass** das Wandteil (20) in einem axialen Abstand (b) vom ersten Ende (E1) der Umfangswand (18a) beginnt.

12. Gehäuse nach einem der vorhergehenden Ansprüche 4 bis 11, **dadurch gekennzeichnet, dass** das Wandteil (20) und die Wandverstärkung (22) oder das Wandteil (20) und wenigstens zwei einen axialen Abstand voneinander aufweisende Umfangswandabschnitte (22k, 221) der Wandverstärkung (22) mit Presspassung aufeinandersitzen.

13. Gehäuse nach einem der vorhergehenden Ansprüche, **dadurch gekennzeichnet, dass** das Wandteil (20) und die Wandverstärkung (22) wenigstens stellenweise aneinander befestigt sind, insbesondere durch Kleben oder Schweißen, vorzugsweise durch Punktschweißen.

14. Gehäuse nach einem der vorhergehenden Ansprüche, **dadurch gekennzeichnet, dass** die Wandverstärkung (22) im Bereich des gemeinsamen Umfangswandabschnitts (18d) eine oder mehrere auf dem Umfang verteilt angeordnete Ausnehmungen (54) aufweist, die vorzugsweise im Bereich des sich kontinuierlich verjüngenden gemeinsamen Umfangswandabschnitts (18d) angeordnet sind.

15. Gehäuse nach Anspruch 14, **dadurch gekennzeichnet, dass** die Ausnehmungen (54) durch die Wandverstärkung (22) in diesem Bereich bildende und sich in die Tiefziehrichtung (T) erstreckende Streifen (58) begrenzt sind.

16. Gehäuse nach Anspruch 15, **dadurch gekennzeichnet, dass** das Wandteil (20) und die Wandverstärkung (22) im Bereich der Streifen (58) aneinander befestigt sind.

17. Gehäuse nach einem der vorhergehenden Ansprüche 4 bis 16, **dadurch gekennzeichnet, dass** im Bereich der gemeinsamen Umfangswand (18a) das Wandteil (20) und/oder die Wandverstärkung (22) längs der Tiefziehrichtung (T) und/oder quer dazu verlaufende Sicken (46a, 46b, 48) aufweist.

18. Gehäuse nach Anspruch 17, **dadurch gekennzeichnet, dass** die Sicken (46a, 46b, 48) im Bereich des sich kontinuierlich verjüngenden gemeinsamen Umfangswandabschnitts (18d), insbesondere Bereich der Streifen (58), angeordnet sind.

19. Gehäuse nach einem der vorhergehenden Ansprüche, **dadurch gekennzeichnet, dass** das Wandteil (20) bezüglich dem Hohlraum (16) innen und die Wandverstärkung (22) außen angeordnet ist.
